# EUROPEAN PATENT APPLICATION

(11) **EP 2 570 044 A2**
(43) Date of publication of application: **20.03.2013**
(21) Application number: 12183645.6
(22) Date of filing: 10.09.2012
(51) Int. Cl.: A45C 11/00, H04B 1/38

(54) **Casing for portable electronic apparatus**

(30) Priority: 19.09.2011 IT RE20110071
(71) Applicant: Eurotek Italia SRL, 42124 Reggio Emilia (IT)
(72) Inventor: Simonazzi, Marco, 42124 Reggio Emilia (IT)
(74) Representative: Corradini, Corrado

(57) **Abstract**

Casing for a telephone or any other touch screen electronic apparatus comprising a rigid shell (1) closed at the upper part by a sheet (34) made of semirigid transparent synthetic material hinged to a side of the shell (1) and kept closed by suitable means.

## Description

The present invention refers to portable electronic apparatus incorporating one or more functions, such as for example cellular phones, i-pods or the like.

These apparatus comprise a body in which there are housed the actuation circuit, a keypad for digitising the controls, a screen which displays the information for the user and in the case of telephones at least one microphone and a speaker.

The most recent generation of these apparatus uses a touch screen digitizing system, in which controls are imparted by means of physical contact of an object or finger with a given area of the screen instead of using mechanical controls.

Touch screens of the most recent applications are of the capacitive type, and they exploit the variation of the dielectric capacity typical of capacitors.

The telephone glass is covered by a thin layer of metal oxide on the outer part.

A voltage that propagates uniformly over the entire surface of the screen due to the metal oxide is applied to the four corners of the panel; when the finger or electricity conductor material touches the screen there occurs a surface capacity variation, which is read by a matrix of capacitors on a panel arranged beneath the glass surface.

The present invention specifically refers to apparatus provided with a touch screen digitizing system of the capacitive type.

This type of apparatus has a screen with dimensions as large as possible compatibly with the dimensions of the apparatus, the screen being subject to wear, scratches or other deteriorations during the use of the apparatus.

This drawback is overcome by applying on the screen, before the apparatus is placed in the market, a thin disposable sheet made of transparent self-adhesive synthetic material.

This thin layer is made of material suitable not to jeopardize the operation of the touch screen, given that it does not jeopardize the capacitive effect of the finger used to touch the screen

It has a limited duration given that it is intended to be removed should the apparatus be used for the first time.

All the apparatus provided with a capacitive touch screen face the problem of protecting the apparatus and the screen against damage and wear that occurs during the life of the apparatus.

For such purpose, there are known box-shaped casings, provided with a rigid cover which is easily opened during the use of the apparatus, and closed thereafter.

The cover covers at least the touch screen, preventing use thereof.

These casings are not uncomfortable, in that whenever the apparatus is used (for example for a received call) they require to be opened.

It was thought of providing casings that leave the screen uncovered, in turn protected by a thin disposable sheet made of self-adhesive transparent synthetic material similar to the one applied by the manufacturer.

However, these casings do not offer any mechanical protection to the screen, which is the most vulnerable part of the apparatus.

An essential characteristic of the transparent protections for the screen, according to the known art, lies in that they should be placed at intimate contact with the screen so as not to jeopardize the touch-sensitive functionality.

Furthermore, this type of protection reveals an insufficient duration.

The object of the present invention is to provide a device for the protection of an electronic apparatus provided with a touch screen capable of overcoming the previously mentioned drawbacks.

This object is attained by a protection casing having the characteristics mentioned in the independent claims.

The casing according to the invention is made up of a rigid parallelepiped-shaped shell having an openable side constituted by, or comprising, a transparent flexible sheet made of synthetic material having suitable electric characteristics, such as PET (polyethylene terephthalate) and having a thickness comprised between 0.3 and 0.6 mm, preferably 0.4 mm.

Said sheet is intended to cover the screen being arranged in proximity of the same without being at intimate contact, it is sufficiently rigid to protect the screen even against impacts, and it does not jeopardize the touch-sensitive functionality of the screen.

Actually, by pressing the sheet, for example using a finger, the underlying screen generates the required signal with absolute precision.

The document KR 100 942 340 B1 discloses a casing for an electronic apparatus provided with a touch screen comprising a rigid shell upperly closed by a rigid sheet hinged to a side of the shell and comprising a portion made of a material semirigid and transparent.

No indication is given about the characteristic of said material.

The functional and construction characteristics of the invention will be clear from the detailed description that follows, which with the help of the attached drawings illustrates a preferred solution thereof provided by way of nonlimiting example.

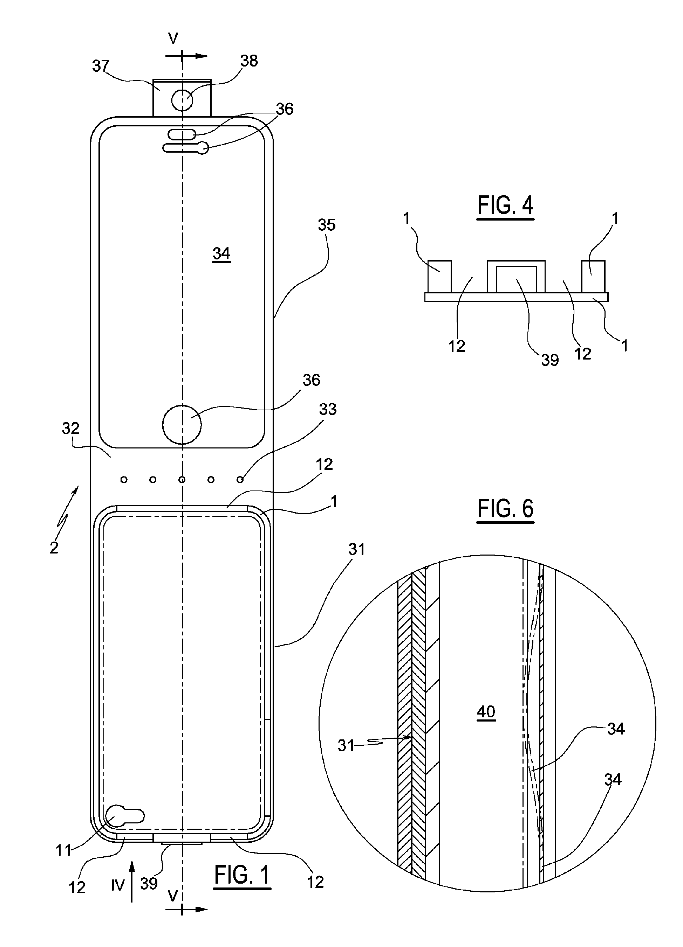

Fig 1 shows the plan view of the invention, in open condition.
Fig 2 shows the invention of Fig 1 seen from one side.
Fig 3 shows the invention of Fig 1 seen from the other side.
Fig 4 shows the invention of Fig 1 seen from IV.
Fig 5 shows the invention of Fig 1 seen closed.
Fig 6 shows an enlarged detail of Fig 5.

The figures show the rigid shell 1, made of rigid synthetic material and provided with a first opening 11 on the bottom.

The shell 1 also comprises openings 12 on the sides, one of which is upper. The openings 12 are positioned so as to allow access to the plugs and other operative members of the telephone.

In the illustrated example the rigid shell 1 is contained in a flexible casing 2 which covers both the bottom and the open upper side thereof.

The flexible casing 2 has a portion 31 stuck to the bottom and it is extended beyond the sticking with a portion 32, which serves as a hinge and it has a width equivalent to the bottom and a length at least equivalent to the thickness of the shell 1.

The portion 32 has holes 33 which, with the casing closed, are superimposed to one of the openings 12 of the shell.

Beyond the flexible portion 32 there is extended a semi-rigid portion, adapted to cover the open side of the shell, which is constituted by a transparent sheet 34 made of polyethylene terephthalate, also referred to as capacitive PET, having a thickness of 0.4 mm and contained in a frame 35 made of the same material as the portion 32.

The transparent semi-rigid portion comprises further openings 36 adapted to allow access to plugs or members of the telephone.

The free side of the frame distant from the portion 32 has a tab 37 provided with a permanent magnet 38 adapted to be superimposed, with casing closed, with analogous magnet 39 fixed to the edge of the shell.

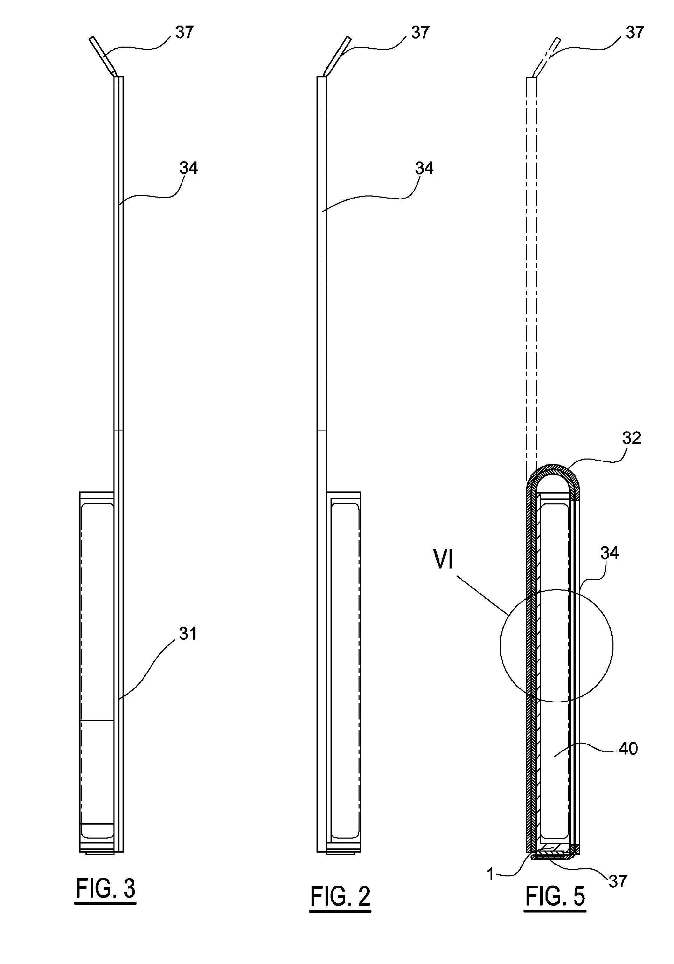

When the apparatus 40 is inserted into the casing and the latter is closed (Fig 5), the transparent portion is in proximity, though not perfectly in contact, with the screen of the telephone and leaves the icon present thereon clearly visible.

By pressing a finger on the screen at an icon the desired icon is digitized by pressing the sheet 34 which is deformed as illustrated in Fig 5.

It should be understood that the invention is not limited to the example described above and that it may be subjected to variants and improvements without departing from the scope of protection of the claims that follow.

## Claims

1. Casing for a telephone or any other touch screen electronic apparatus comprising a rigid shell closed at the upper part by a flexible sheet hinged to a side of the shell and kept closed by suitable means, comprising a portion made of semi-rigid transparent synthetic material **characterised in that** the sheet made of synthetic material is made using polyethylene terephthalate, also referred to as capacitive PET having a thickness comprised between 0.3 and 0.6 mm, preferably 0.4 mm.

2. Casing according to claim 1 **characterised in that** the shell and the sheet made of semi-rigid transparent synthetic material have openings for allowing access to plugs or other members of the apparatus contained in the casing.

3. Casing according to claim 1 **characterised in that** the means that hold the sheet flexible in closed position on the shell are magnetic means.
